# EUROPÄISCHE PATENTSCHRIFT

(11) **EP 2 712 124 B1**
(45) Veröffentlichungstag und Bekanntmachung des Hinweises auf die Patenterteilung: **01.04.2015**
(21) Anmeldenummer: 12185676.9
(22) Anmeldetag: 24.09.2012
(51) Int. Cl.: H04L 12/40, G05B 19/042

(54) **Redundant betreibbares industrielles Kommunikationssystem und Verfahren zu dessen Betrieb**
Redundant industrial communication system and method for its operation
Système de communication industriel pouvant fonctionner de manière redondante et procédé de fonctionnement dudit système

(43) Veröffentlichungstag der Anmeldung: 26.03.2014
(73) Patentinhaber: Siemens Aktiengesellschaft, 80333 München (DE)
(72) Erfinder: Keller, Stefan, 76337 Waldbronn (DE); Angst, Hermann, 76199 Karlsruhe (DE); Kühnel, Siegfried, 18374 Zingst (DE); Lumpp, Henryk, 76187 Karlsruhe (DE); Scheider, Martin, 90530 Wendelstein (DE)

(56) Entgegenhaltungen:
- US-A1- 2009 234 997
- US-A1- 2010 262 736

## Beschreibung

In verteilten industriellen Automatisierungssystemen ist bei einer Erfassung, Auswertung und Übermittlung von Meß- und Steuerungsdaten ist sicherzustellen, daß vollständige und unveränderte Daten insbesondere bei zeitkritischen industriellen Produktionsprozessen in Echtzeit vorliegen. Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Nicht oder nicht vollständig übermittelte Meldungen können beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy oder Parallel Redundancy Protocol, für hochverfügbare, redundant betreibbare in industriellen Kommunikationsnetze entwickelt worden. Media Redundancy Protocol (MSR) ist im Standard IEC 62439 definiert und ermöglicht eine Kompensation einzelner Verbindungsausfälle in Netzen mit einfacher Ringtopologie bei stoßbehafteter redundanter Übertragung von Nachrichten.

Entsprechend Media Redundancy Protocol ist einem Switch mit zwei Ports innerhalb der Ringtopologie ein Redundanz-Manager zugeordnet, der das Netz auf Verbindungsausfälle überwacht und ggf. eine Schaltmaßnahme für einen Ringschluß einleitet. In normalen Betriebszustand prüft der Redundanz-Manager anhand von Test- Nachrichten, ob innerhalb der Ringtopologie eine Unterbrechung aufgetreten ist. Nachrichten mit Nutzdaten leitet der dem Redundanz-Manager zugeordnet Switch normalerweise jedoch nicht von einem Port an den anderen Port weiter. Somit wird verhindert, daß Nachrichten mit Nutzdaten permanent innerhalb der Ringtopologie zirkulieren. Fällt innerhalb der Ringtopologie ein Switch oder eine Verbindung aus, werden von einem Port ausgesendeten Test- Nachrichten nicht mehr am jeweils anderen Port empfangen. Anhand dessen kann der Redundanz-Manager einen Ausfall erkennen und leitet bei einem Ausfall Nachrichten mit Nutzdaten im Unterschied zum normalen Betriebszustand von einem Port an den anderen Port und umgekehrt weiter. Darüber hinaus veranlaßt der Redundanz-Manager eine Benachrichtigung der übrigen Switches über eine Ausfallbedingte Topologieänderung. Auf diese Weise wird vermieden, daß Nachrichten über die ausgefallene Verbindung übermittelt werden.

Stoßbehaftete Medienredundanzverfahren lassen sich grundsätzlich mit relativ geringem Aufwand realisieren. Nachteilig ist jedoch, daß einerseits Nachrichten im Fehlerfall verloren gehen können und andererseits während einer Rekonfiguration eines Kommunikationsnetzes zunächst ein Störungszustand vorliegt. Ein derartiger Störungszustand muß durch ein überlagertes Kommunikationsprotokoll, beispielsweise mittels TCP/IP auf Vermittlungs- bzw. Transportschichtebene, gesichert werden, um eine Unterbrechung einer Kommunikationsverbindung zu vermeiden.

Auch PROFINET (IEC 61158 Type 10) referenziert Media Redundancy Protocol als stoßbehaftetes Medienredundanzverfahren innerhalb eines Kommunikationsnetzes mit Ringtopologie. Media Redundancy Planned Duplication (MRPD) stellt demgegenüber eine Erweiterung für eine stoßfreie Übertragung von isochronen Echtzeitdaten. Bei Media Redundancy Planned Duplication handelt es sich jedoch nicht um ein anwendungsneutrales stoßfreies Medienredundanzverfahren, sondern um eine PROFINETspezifische Erweiterung.

High-availability Seamless Redundancy (HSR) und Parallel Redundancy Protocol (PRP) sind im Standard IEC 62439-3 definiert und ermöglichen eine stoßfreie redundante Übertragung von Nachrichten mit äußerst geringen Erholungszeiten. Entsprechend High-availability Seamless Redundancy und Parallel Redundancy Protocol wird jede Nachricht von einer sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

In EP 2 282 452 A1 ist ein Verfahren zur Datenübermittlung innerhalb eines ringartigen Kommunikationsnetzes beschrieben, bei dem die Datenübermittlung entsprechend High-availability Seamless Redundancy erfolgt und das Kommunikationsnetz zumindest einen Master-Knoten, einen Quellknoten und einen Zielknoten umfaßt. Jeder Knoten weist eine erste und eine zweite Kommunikationsschnittstelle mit einem jeweiligen ersten und zweiten Nachbarknoten auf. Darüber hinaus empfängt jeder Knoten Datenrahmen über die erste Kommunikationsschnittstelle und leitet den empfangenen Datenrahmen entweder verändert oder unverändert über die zweite Kommunikationsschnittstelle ohne zusätzliche Verzögerung weiter. Der Master-Knoten sendet einen ersten und zweiten redundanten Datenrahmen oder einen leeren Datenrahmen an seinen ersten bzw. zweiten Nachbarknoten. Bei Empfang der beiden redundanten Datenrahmen befüllt der Quellknoten den jeweiligen Datenrahmen in einem vorbestimmten reservierten Bereich mit Prozeßdaten. Anschließend wird jeder befüllte Datenrahmen umgehend und individuell an den ersten bzw. zweiten Nachbarknoten des Quellknotens weitergeleitet. Der Zielknoten extrahiert schließlich die Prozeßdaten aus dem ersten empfangenen befüllten Datenrahmen eines Paars von redundanten Datenrahmen.

Aus EP 2 413 538 A1 ist ein Verfahren zur redundanten Kommunikation in einem Kommunikationssystem bekannt, das mehrere Kommunikationsnetze umfaßt. Die Kommunikationsnetze sind über zumindest einen Kopplungsknoten miteinander verbunden. Eine Rückübertragung von Daten, die aus einem ersten Kommunikationsnetz stammen, aus einem zweiten Kommunikationsnetz zurück in das erste Kommunikationsnetz wird auf Grund einer vor Datenübertragung definierten Information verhindert.

Im Standard IEC 62439-3 sind für das Parallel Redundancy Protocol (PRP) aufgrund verhältnismäßig langer Latenzlaufzeiten in Drahtlos-Kommunikationssystemen und eines dadurch bedingten nicht-deterministischen Übertragungsverhaltens bislang ausschließlich kabelgebundene Übertragungsstrecken vorgeschrieben. In "Towards a Reliable Parallel Redundant WLAN Black Channel", Markus Rentschler, Per Laukemann, IEEE 2012 wird eine Eignung von WLAN-Übertragungsstrecken in PRP-Kommunikationsnetzen untersucht. Mittels paralleler Anwendung unterschiedlicher Diversitätstechniken für beispielsweise Raum, Zeit und Frequenz können in WLAN-Kommunikationsnetzen Auswirkungen von stochastischem Kanalschwund hinreichend kompensiert werden.

Der vorliegenden Erfindung liegt die Aufgabe zugrunde, ein redundant betreibbares Kommunikationssystem mit Kabellos-Übertragungsstrecken zu schaffen, das für eine Verwendung in industriellen Automatisierungssystemen geeignet ist, sowie Komponenten für ein solches Kommunikationssystem und ein Verfahren zu dessen Betrieb anzugeben.

Diese Aufgabe wird erfindungsgemäß durch ein Kommunikationssystem mit den in Anspruch 1 angegebenen Merkmalen sowie durch ein Verfahren mit den in Anspruch 11 angegebenen Merkmalen gelöst. Vorteilhafte Weiterbildungen der vorliegenden Erfindung sind in den abhängigen Ansprüchen angegeben.

Das erfindungsgemäße Kommunikationssystem umfaßt eine Mehrzahl von redundant an ein industrielles Kommunikationsnetz angebundenen Kommunikationsgeräten mit jeweils zumindest einer ersten und einer zweiten Sende- und Empfangseinheit. Eine Übertragung redundant zu übermittelnder Nachrichten erfolgt vorzugsweise entsprechend High-availability Seamless Redundancy bzw. entsprechend Parallel Redundancy Protocol. Beide Sende- und Empfangseinheiten weisen jeweils eine Schnittstelle für eine Netzverbindung des industriellen Kommunikationsnetzes sowie eine identische Netzadresse auf. Mit der ersten und zweiten Sende- und Empfangseinheit ist eine Signalverarbeitungseinheit verbunden, die eine Multiplexereinheit zur parallelen Weiterleitung zu sendender Nachrichten an beide Sendeeinheiten und eine Redundanzbehandlungseinheit zur Verarbeitung von beiden Empfangseinheiten empfangener Nachrichten aufweist. Die Signalverarbeitungseinheit eines redundant angebundenen Kommunikationsgeräts kann beispielsweise mittels eines Field Programmable Gate Arrays realisiert sein. Die Redundanzbehandlungseinheit umfaßt eine Filtereinheit, die für eine Detektion empfangener redundanter Nachrichten eingerichtet ist.

Des weiteren weist das erfindungsgemäße Kommunikationssystem eine Mehrzahl von dem industriellen Kommunikationsnetz zugeordneten Netzinfrastrukturgeräten mit jeweils einer Mehrzahl von Sende- und Empfangseinheiten und einem die Sende- und Empfangseinheiten eines Netzinfrastrukturgeräts miteinander verbindenden Koppelelement. Das Koppelelement eines Netzinfrastrukturgeräts kann beispielsweise ein Hochgeschwindigkeitsbus bzw. ein Backplane switch mit zugeordnetem Controller sein. Das industrielle Kommunikationsnetz umfaßt eine Mehrzahl von Sende- und Empfangsstationen für eine kabellose Nachrichtenübermittlung. Beispielsweise können erste und zweite Sende- und Empfangsstationen vorgesehen sein, wobei erste Sende- und Empfangsstationen Basisstationen und zweite Sende- und Empfangsstationen mit einer Basisstation verbindbare Kabellos-Kommunikationsgeräte sind.

Darüber hinaus umfaßt das industrielle Kommunikationsnetz erfindungsgemäß eine Mehrzahl von Puffer-Speichereinheiten für an einem Netzknoten kabelgebunden empfangene und von diesem kabellos zu sendende Nachrichtenelemente. Eine Puffer-Speichereinheit ist einem Netzinfrastrukturgerät oder einer Sende- und Empfangsstation für eine kabellose Nachrichtenübermittlung zugeordnet und vorzugsweise als Ringpuffer ausgestaltet. Ferner weisen die Puffer-Speichereinheiten jeweils eine maximale Puffer-Größe auf und sind derart ausgestaltet und eingerichtet sind, daß bei Überschreiten der maximalen Puffer-Größe ein ältestes in der jeweiligen Puffer-Speichereinheit befindliches Nachrichtenelement aus der Puffer-Speichereinheit gelöscht wird. Das älteste Nachrichtenelement entspricht beispielsweise dem unter allen in der jeweiligen Puffer-Speichereinheit befindlichen Nachrichtenelement zuerst in die Puffer-Speichereinheit eingefügten Nachrichtenelement.

Außerdem sind die Puffer-Speichereinheiten erfindungsgemäß jeweils derart ausgestaltet und eingerichtet, daß bis zu einem Überschreiten der maximalen Puffer-Größe das älteste Nachrichtenelement als nächstes kabellos zu sendendes Nachrichtenelement ausgewählt wird. Auf diese Weise können unzulässig hohe Latenzzeiten in einem redundant betreibbaren industriellen Kommunikationssystem auch bei Verwendung von Kabellos-Übertragungsstrecken vermieden werden.

Entsprechend einer besonders bevorzugten Ausgestaltung des erfindungsgemäßen Kommunikationssystems sind die Puffer-Speichereinheiten derart ausgestaltet und eingerichtet sind, daß ein Nachrichtenelement bei Überschreiten eines vorgegebenen zulässigen Alters aus der jeweiligen Puffer-Speichereinheit gelöscht wird. Dies trägt zu einer weiteren Verringerung von Latenzzeiten bei.

Zueinander redundante Nachrichten sind vorzugsweise durch eine einheitliche Sequenznummer gekennzeichnet, wobei die Signalverarbeitungseinheit eines redundant angebundenen Kommunikationsgeräts vorteilhafterweise für eine Vergabe einer Sequenznummer an eine redundant zu übermittelnde Nachricht eingerichtet ist. Darüber hinaus kann der Signalverarbeitungseinheit eine Speichereinheit zugeordnet sein, die für eine Speicherung von Sequenznummern bereits fehlerfrei empfangener Nachrichten eingerichtet ist. In diesem Fall ist die Redundanzbehandlungseinheit vorzugsweise für eine Überprüfung auf eine bereits gespeicherte Sequenznummer bei Empfang einer neuen Nachricht eingerichtet. Dies ermöglicht eine besonders effiziente Behandlung redundanter Nachrichten.

Entsprechend dem erfindungsgemäßen Verfahren zum redundanten Betrieb eines industriellen Kommunikationssystems wird eine Mehrzahl von Kommunikationsgeräten redundant an ein industrielles Kommunikationsnetz angebunden. Dabei weisen die Kommunikationsgeräte jeweils zumindest eine erste und eine zwei-Le Sende- und Empfangseinheit auf, die jeweils eine Schnittstelle für eine Netzverbindung des industriellen Kommunikationsnetzes umfassen. Beide Sende- und Empfangseinheiten weisen eine identische Netzadresse auf. Außerdem umfassen die Kommunikationsgeräte jeweils eine mit der ersten und zweiten Sende- und Empfangseinheit verbundene Signalverarbeitungseinheit, die zu sendende Nachrichten parallel an beide Sendeeinheiten weiterleitet und von den Empfangseinheiten empfangene redundante Nachrichten detektiert. Redundant zu übermittelnde Nachrichten werden vorzugsweise entsprechend High-availability Seamless Redundancy bzw. entsprechend Parallel Redundancy Protocol übertragen.

Darüber hinaus ist erfindungsgemäß eine Mehrzahl von dem industriellen Kommunikationsnetz zugeordneten Netzinfrastrukturgeräten vorgesehen, die jeweils eine Mehrzahl von Sende- und Empfangseinheiten und ein die Sende- und Empfangseinheiten eines Netzinfrastrukturgeräts miteinander verbindendes Koppelelement umfassen. Im industriellen Kommunikationsnetz erfolgt eine Nachrichtenübermittlung zumindest abschnittsweise kabellos mittels einer Mehrzahl von Sende- und Empfangsstationen. Des weiteren umfaßt das industrielle Kommunikationsnetz eine Mehrzahl von Puffer-Speichereinheiten für an einem Netzknoten kabelgebunden empfangene und von diesem kabellos zu sendende Nachrichtenelemente. Die Puffer-Speichereinheiten sind jeweils einem Netzinfrastrukturgerät oder einer Spende- und Empfangsstation zugeordnet und weisen jeweils eine maximale Puffer-Größe auf. Bei Überschreiten der maximalen Puffer-Größe wird erfindungsgemäß ein ältestes in der jeweiligen Puffer-Speichereinheit befindliches Nachrichtenelement aus der Puffer-Speichereinheit gelöscht. Das älteste Nachrichtenelement entspricht vorzugsweise unter allen in der jeweiligen Puffer-Speichereinheit befindlichen Nachrichtenelementen demjenigen Nachrichtenelement, das zuerst in die Puffer-Speichereinheit eingefügt worden ist. Bis zu einem Überschreiten der maximalen Puffer-Größe wird das älteste Nachrichtenelement als nächstes kabellos zu sendendes Nachrichtenelement ausgewählt. Auf diese Weise können insbesondere in PRP- und HSR-Kommunikationsnetzen unzulässig hohe Latenzzeiten vermieden werden.

Zusätzlich zu vorangehend beschriebenen Maßnahmen bzw. Verfahrensschritten können insbesondere auf Sicherungsebene (Schicht 2 entsprechend OSI-Referenzmodell) verwendete Medienzugriffsprotokolle, wie CSMA/CA, derart verändert, daß ein zu sendendes Telegramm bereits nach einer kurzen Retry-Zeit verworfen wird. Außerdem können Laufzeitunterschiede auch durch Verwendung des iPCF-Protokolls (industrial Point Coordination Function) begrenzt werden. Zur erhöhten Toleranz gegenüber Laufzeitunterschieden kann auch eine Länge von Sequenznummern für zueinander redundante Nachrichten vergrößert werden. Zueinander redundante Nachrichten werden entsprechend einer bevorzugten Ausgestaltung des erfindungsgemäßen Verfahrens durch eine einheitliche Sequenznummer gekennzeichnet. Beispielsweise vergibt die Signalverarbeitungseinheit eines redundant angebundenen Kommunikationsgeräts eine Sequenznummer an eine redundant zu übermittelnde Nachricht. Entsprechend einer weiteren Ausgestaltung des erfindungsgemäßen Verfahrens ist der Signalverarbeitungseinheit eine Speichereinheit zugeordnet, die Sequenznummern bereits fehlerfrei empfangener Nachrichten speichert. Dabei überprüft vorteilhafterweise die Redundanzbehandlungseinheit eine empfangene neue Nachricht auf eine bereits gespeicherte Sequenznummer.

Darüber hinaus kann eine Konfiguration von Kabellos-Netzkomponenten vorteilhaferweise derart angepaßt, daß eine PRP- oder HSR-Telegrammen entsprechende maximal mögliche Telegrammlänge zugelassen wird. Eine weitere Begrenzung der Latentzeiten ergibt sich entsprechend einer weiteren Ausgestaltung des erfindungsgemäßen Verfahrens, wenn ein Nachrichtenelement bei Überschreiten eines vorgegebenen zulässigen Alters aus der jeweiligen Puffer-Speichereinheit gelöscht wird.

Die vorliegende Erfindung wird nachfolgend an einem Ausführungsbeispiel anhand der Zeichnung näher erläutert. Es zeigt
- Figur 1: ein redundant betreibbares industrielles Kommunikationssystem mit einer Mehrzahl von redundant an ein industrielles Kommunikationsnetz angebundenen Kommunikationsgeräten,
- Figur 2-6: eine schematische Darstellung eines Ringpuffers eines Netzknotens für das Kommunikationssystem gemäß Figur 1 in unterschiedlichen Befüllungszuständen.

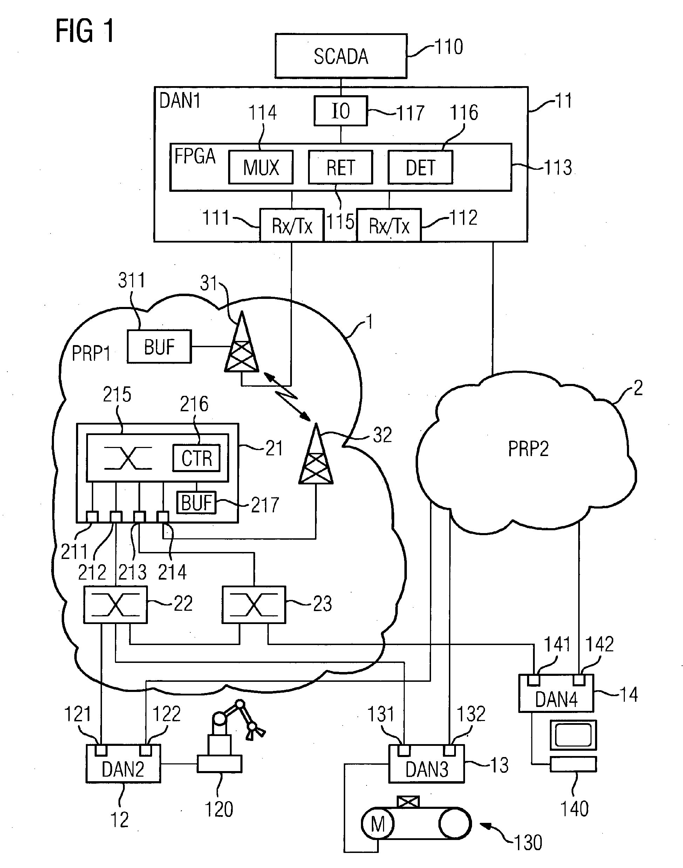

Das in Figur 1 dargestellte industrielle Kommunikationssystem umfaßt eine Mehrzahl von redundant an zwei Teilnetze 1, 2 angebundene Kommunikationsgeräte 11-14, die im vorliegenden Ausführungsbeispiel eine identische Ausgestaltung aufweisen. Exemplarisch ist ein redundant angebundenes Kommunikationsgerät 11 detaillierter dargestellt, das einem SCADA-System 110 (Supervisory Control and Data Acquisition) zugeordnet sein kann und mit diesem über einen Interlink-Port 117 verbunden ist. Die übrigen redundant angebundenen Kommunikationsgeräte 12-14 sind im vorliegenden Ausführungsbeispiel auf Feldebene Sensor- bzw. Aktorsystemen eines industriellen Automatisierungssystems zugeordnet, beispielsweise einem Fertigungsroboter 120, einem Antrieb 130 für ein Fördersystem oder einer Bedien- und Beobachtungsstation 140 an einer Fertigungslinie.

Die redundant angebundenen Kommunikationsgeräte 11-14 weisen jeweils eine erste und eine zweite Sende- und Empfangseinheit 111-112, 121-122, 131-132, 141-142 auf, die jeweils eine Schnittstelle für eine Netzverbindung zu einem der beiden redundanten Teilnetze 1, 2 umfassen. Dabei weisen beide Sende- und Empfangseinheiten 111-112, 121-122, 131-132, 141-142 der redundant angebundenen Kommunikationsgeräte 11-14 eine identische IP-Adresse auf.

Beim exemplarisch dargestellten Kommunikationsgerät 11 ist mit der ersten und zweiten Sende- und Empfangseinheit 111-112 eine mittels eines Field Programmable Gate Array realisierte Signalverarbeitungseinheit 113 verbunden, die eine Multiplexereinheit 114 zur parallelen Weiterleitung zu sendender Nachrichten an beide Sendeeinheiten 111-112 umfaßt. Außerdem ist zur Verarbeitung von beiden Empfangseinheiten 111-112 empfangener Nachrichten eine Redundanzbehandlungseinheit 115 vorgesehen, die eine Filtereinheit 116 für eine Detektion empfangener redundanter Nachrichten umfaßt. Redundant zu übermittelnde Nachrichten werden im vorliegenden Ausführungsbeispiel entsprechend Parallel Redundancy Protocol übertragen. Grundsätzlich ist auch eine Übertragung entsprechend High-availability Seamless Redundancy möglich. Nachfolgende Ausführungen gelten hierfür analog.

Zueinander redundante Nachrichten werden durch eine einheitliche Sequenznummer gekennzeichnet. Dabei vergibt die Signalverarbeitungseinheit eines redundant angebundenen Kommunikationsgeräts 11-14 eine Sequenznummer an eine redundant zu übermittelnde Nachricht. Der Signalverarbeitungseinheit ist außerdem eine Speichereinheit zugeordnet, die Sequenznummern bereits fehlerfrei empfangener Nachrichten speichert. Auf dieser Grundlage überprüft die Redundanzbehandlungseinheit zur Detektion empfangener redundanter Nachrichten eine empfangene neue Nachricht auf eine bereits gespeicherte Sequenznummer.

Die beiden redundanten Teilnetze 1, 2 umfassen jeweils eine Mehrzahl von zugeordneten Netzinfrastrukturgeräten 21-23, im vorliegenden Ausführungsbeispiel Bridges oder Switches. Für Teilnetz 1 ist dies in Figur 1 exemplarisch detaillierter dargestellt. Die Netzinfrastrukturgeräte 21-23 umfassen jeweils eine Mehrzahl von Sende- und Empfangseinheiten 211-214 und ein die Sende- und Empfangseinheiten 211-214 miteinander verbindendes Koppelelement 215. Aus Gründen einer einfacheren Übersicht ist dies in Figur 1 nur für das Netzinfrastrukturgerät 21 explizit dargestellt, gilt jedoch auch für die beiden anderen Netzinfrastrukturgeräte 22-23. Das Koppelelement 215 des Netzinfrastrukturgeräts 21 ist im vorliegenden Ausführungsbeispiel durch einen Backplane Switch mit zugeordnetem Controller 216 realisiert.

Entlang einer Übertragungsstrecke im Teilnetz 1 werden Nachrichten entsprechend Figur 1 zwischen zwei Funkstationen 31-32 auf WLAN-Basis kabellos ausgetauscht. Dabei sind das Netzinfrastrukturgerät 21 und die Funkstation 32 einem Netzknoten zugeordnet. Dem Netzinfrastrukturgerät 21 und der Funkstation 31 ist jeweils eine Puffer-Speichereinheit 217, 311 für an einem Netzknoten kabelgebunden empfangene und von diesem kabellos zu sendende Nachrichtenelemente zugeordnet. Diese Puffer-Speichereinheiten 217, 311 sind vorzugsweise als Ringpuffer ausgestaltet und weisen jeweils eine vorgegebene maximale Puffer-Größe auf.

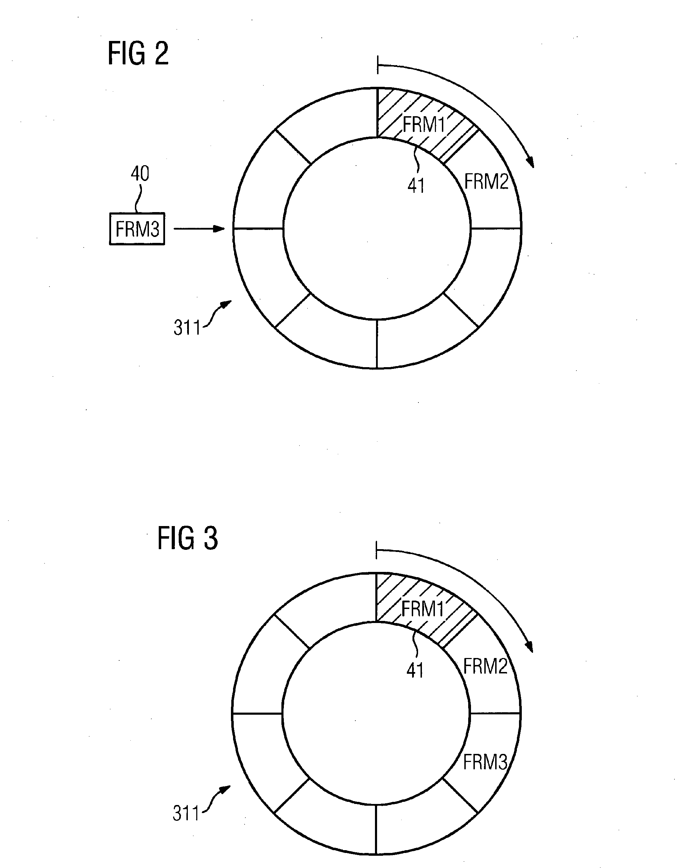

In den Figuren 2 und 3 ist für die Puffer-Speichereinheit 311 exemplarisch dargestellt, daß bis zu einem Überschreiten der maximalen Puffer-Größe jeweils ein ältester Datenrahmen FRM1 als nächster kabellos zu sendender Datenrahmen 41 ausgewählt wird. Dies gilt auch nach einem Empfang des Datenrahmens FRM3 als jüngstem kabelgebundenen übermittelten Datenrahmen 40. In den Figuren 2 und 3 ist der jeweils als nächster kabellos zu sendende Datenrahmen 41 schraffiert dargestellt. Der älteste Datenrahmen FRM1 entspricht dem unter allen in der Puffer-Speichereinheit 311 befindlichen Datenrahmen FRM1, FRM2, FRM3 zuerst in die Puffer-Speichereinheit 311 eingefügten Datenrahmen.

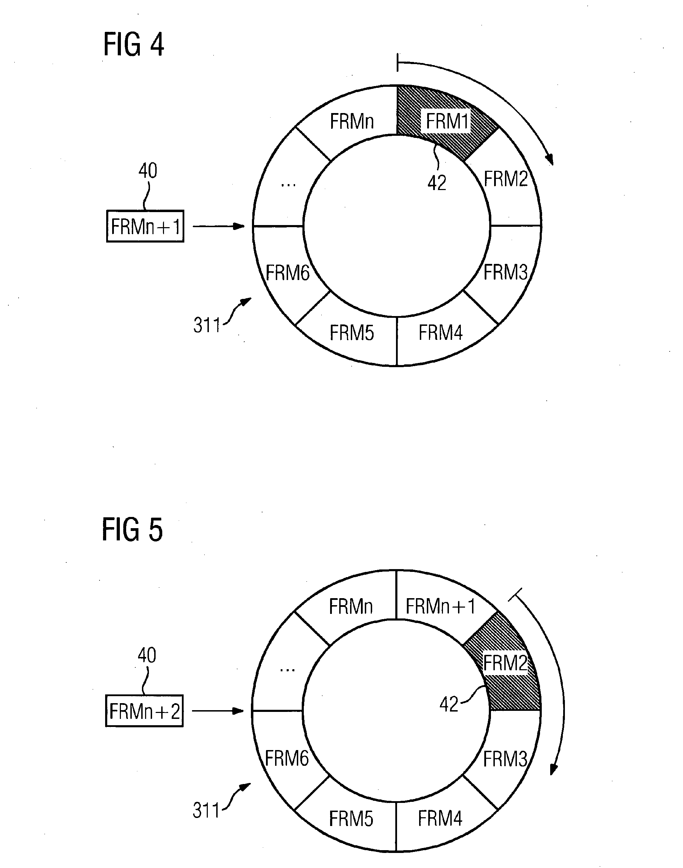

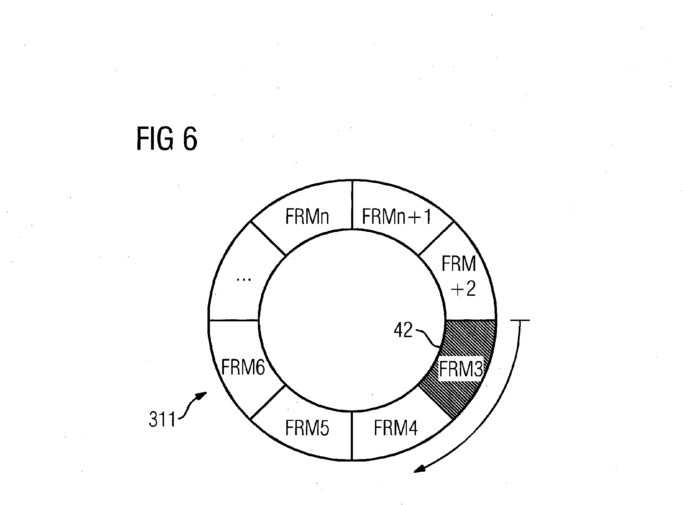

Entsprechend den Figuren 4 bis 6 wird der jeweils älteste in der Puffer-Speichereinheit 311 befindliche Datenrahmen FRM1, FRM2 bei einem Überschreiten der maximalen Puffer-Größe (n) nach Empfang der Datenrahmen FRMn+1, FRMn+2 als jüngsten kabelgebundenen übermittelten Datenrahmen 40 aus der Puffer-Speichereinheit gelöscht 311. In den Figuren 4 bis 6 ist der jeweils als nächster zu löschende Datenrahmen 42 eng schraffiert dargestellt. Vor Empfang von Datenrahmen FRMn+1 - also nach Empfang von Datenrahmen FRMn - ist dies Datenrahmen FRM1 (Figur 4). Nach Empfang von Datenrahmen FRMn+1 ist dies Datenrahmen FRM2 (Figur 5), und nach von Datenrahmen FRMn+1 ist dies Datenrahmen FRM3 (Figur 6). Zusätzlich zum beschriebenen, sich von einem FIFO-Mechanismus unterscheidenden Ringpuffer-Mechanismus wird entsprechend einer bevorzugten Ausführungsform ein Datenrahmen bei Überschreiten eines vorgegebenen zulässigen Alters aus der jeweiligen Puffer-Speichereinheit gelöscht.

Die Merkmale der vorangehend beschriebenen Ausführungsbeispiele können sowohl einzeln als auch in beschriebener Kombination miteinander realisiert sein.

## Patentansprüche

1. Redundant betreibbares industrielles Kommunikationssystem mit
- einer Mehrzahl von redundant an ein industrielles Kommunikationsnetz angebundenen Kommunikationsgeräten (11-14) mit jeweils
- zumindest einer ersten und einer zweiten Sende- und Empfangseinheit (111, 112), die jeweils eine Schnittstelle für eine Netzverbindung des industriellen Kommunikationsnetzes aufweisen, wobei beide Sende- und Empfangseinheiten eine identische Netzadresse aufweisen,
- einer mit der ersten und zweiten Sende- und Empfangseinheit verbundenen Signalverarbeitungseinheit (113), die eine Multiplexereinheit (114) zur parallelen Weiterleitung zu sendender Nachrichten an beide Sendeeinheiten und eine Redundanzbehandlungseinheit (115) zur Verarbeitung von beiden Empfangseinheiten empfangener Nachrichten aufweist, wobei die Redundanzbehandlungseinheit eine Filtereinheit (116) umfaßt, die für eine Detektion empfangener redundanter Nachrichten eingerichtet ist,
- einer Mehrzahl von dem industriellen Kommunikationsnetz zugeordneten Netzinfrastrukturgeräten (21-23) mit jeweils
- einer Mehrzahl von Sende- und Empfangseinheiten (211-214),
- einem die Sende- und Empfangseinheiten eines Netzinfrastrukturgcräts miteinander verbindenden Koppelelement (215),
**dadurch gekennzeichnet, daß**
- das industrielle Kommunikationsnetz eine Mehrzahl von Sende- und Empfangsstationen (31, 32) für eine kabellose Nachrichtenübermittlung umfaßt,
- das industrielle Kommunikationsnetz eine Mehrzahl von Puffer-Speichereinheiten (217, 311) für an einem Netzknoten kabelgebunden empfangene und von diesem kabellos zu sendende Nachrichtenelemente umfaßt, wobei die Puffer-Speichereinheiten jeweils einem Netzinfrastrukturgerät oder einer Sende- und Empfangsstation zugeordnet sind, und wobei die Puffer-Speichereinheiten jeweils eine maximale Puffer-Größe aufweisen und derart ausgestaltet und eingerichtet sind, daß bei Überschreiten der maximalen Puffer-Größe ein ältestes in der jeweiligen Puffer-Speichereinheit befindliches Nachrichtenelement aus der Puffer-Speichereinheit gelöscht wird, und daß bis zu einem Überschreiten der maximalen Puffer-Größe das älteste Nachrichtenelement als nächstes kabellos zu sendendes Nachrichtenelement (41) ausgewählt wird.

2. Kommunikationssystem nach Anspruch 1,
bei dem die Puffer-Speichereinheiten (217, 311) als Ringpuffer ausgestaltet sind.

3. Kommunikationssystem nach einem der Ansprüche 1 oder 2,
bei dem das älteste Nachrichtenelement dem unter allen in der jeweiligen Puffer-Speichereinheit (217, 311) befindlichen Nachrichtenelement zuerst in die Puffer-Speichereinheit eingefügten Nachrichtenelement entspricht.

4. Kommunikationssystem nach einem der Ansprüche 1 bis 3,
bei dem die Puffer-Speichereinheiten (217, 311) derart ausgestaltet und eingerichtet sind, daß ein Nachrichtenelement bei Überschreiten eines vorgegebenen zulässigen Alters aus der jeweiligen Puffer-Speichereinheit gelöscht wird.

5. Kommunikationssystem nach einem der Ansprüche 1 bis 4,
bei dem zueinander redundante Nachrichten durch eine einheitliche Sequenznummer gekennzeichnet sind, und bei dem die Signalverarbeitungseinheit (113) eines redundant angebundenen Kommunikationsgeräts (11-14) für eine Vergabe einer Sequenznummer an eine redundant zu übermittelnde Nachricht eingerichtet ist.

6. Kommunikationssystem nach Anspruch 5,
und bei dem der Signalverarbeitungseinheit (113) eine Speichereinheit zugeordnet ist, die für eine Speicherung von Sequenznummern bereits fehlerfrei empfangener Nachrichten eingerichtet ist, und bei dem die Redundanzbehandlungseinheit für eine Überprüfung auf eine bereits gespeicherte Sequenznummer bei Empfang einer neuen Nachricht eingerichtet ist.

7. Kommunikationssystem nach einem der Ansprüche 1 bis 6,
bei dem die Signalverarbeitungseinheit (113) eines redundant angebundenen Kommunikationsgeräts (11-14) mittels eines Field Programmable Gate Arrays realisiert ist.

8. Kommunikationssystem nach einem der Ansprüche 1 bis 7,
bei dem das Koppelelement (215) eines Netzinfrastrukturgeräts (21-24) ein Hochgeschwindigkeitsbus und/oder ein Backplane Switch mit zugeordnetem Controller (216) ist.

9. Kommunikationssystem nach einem der Ansprüche 1 bis 8,
bei dem eine Übertragung redundant zu übermittelnder Nachrichten entsprechend High-availability Seamless Redundancy und/oder entsprechend Parallel Redundancy Protocol erfolgt.

10. Kommunikationssystem nach einem der Ansprüche 1 bis 9, bei das das industrielle Kommunikationsnetz erste und zweite Sende- und Empfangsstationen für eine kabellose Nachrichtenübermittlung umfaßt, und bei dem erste Sende- und Empfangsstationen Basisstationen sind, und bei dem zweite Sende- und Empfangsstationen einer Basisstation verbindbare Kabellos-Kommunikationsgeräte sind.

11. Verfahren zum redundanten Betrieb eines industriellen Kommunikationssystems, bei dem
- eine Mehrzahl von Kommunikationsgeräten (11-14) redundant an ein industrielles Kommunikationsnetz angebunden wird, wobei die Kommunikationsgeräte (11-14) jeweils
- zumindest eine erste und eine zweite Sende- und Empfangseinheit (111, 112), die jeweils eine Schnittstelle für eine Netzverbindung des industriellen Kommunikationsnetzes aufweisen, wobei beide Sende- und Empfangseinheiten eine identische Netzadresse aufweisen, und
- eine mit der ersten und zweiten Sende- und Empfangseinheit verbundene Signalverarbeitungseinheit (113) umfassen, die zu sendende Nachrichten parallel an beide Sendeeinheiten weiterleitet und von den Empfangseinheiten empfangene redundante Nachrichten detektiert,
- eine Mehrzahl von dem industriellen Kommunikationsnetz zugeordneten Netzinfrastrukturgeräten (21-24) vorgesehen ist, die jeweils
- eine Mehrzahl von Sende- und Empfangseinheiten (211-214) und
- ein die Sende- und Empfangseinheiten eines Netzinfrastrukturgeräts miteinander verbindendes Koppelelement (215) umfassen,
**dadurch gekennzeichnet, daß**
- eine Nachrichtenübermittlung im industriellen Kommunikationsnetz zumindest abschnittsweise kabellos mittels einer Mehrzahl von Sende- und Empfangsstationen (31, 32) erfolgt,
- das industrielle Kommunikationsnetz eine Mehrzahl von Puffer-Speichereinheiten (217, 311) für an einem Netzknoten kabelgebunden empfangene und von diesem kabellos zu sendende Nachrichtenelemente umfaßt, wobei die Puffer-Speichereinheiten jeweils einem Netzinfrastrukturgerät oder einer Sende- und Empfangsstation zugeordnet sind, und wobei die Puffer-Speichereinheiten jeweils eine maximale Puffer-Größe aufweisen,
bei Überschreiten der maximalen Puffer-Größe ein ältestes in der jeweiligen Puffer-Speichereinheit befindliches Nachrichtenelement aus der Puffer-Speichereinheit gelöscht wird,
- bis zu einem Überschreiten der maximalen Puffer-Größe das älteste Nachrichtenelement als nächstes kabellos zu sendendes Nachrichtenelement (41) ausgewählt wird.

12. Verfahren nach Anspruch 11,
bei dem das älteste Nachrichtenelement dem unter allen in der jeweiligen Puffer-Speichereinheit (217, 311) befindlichen Nachrichtenelement zuerst in die Puffer-Speichereinheit eingefügten Nachrichtenelement entspricht.

13. Verfahren nach einem der Ansprüche 11 oder 12,
bei dem ein Nachrichtenelement bei Überschreiten eines vorgegebenen zulässigen Alters aus der jeweiligen Puffer-Speichereinheit (217, 311) gelöscht wird.

14. Verfahren nach einem der Ansprüche 11 bis 13,
bei dem zueinander redundante Nachrichten durch eine einheitliche Sequenznummer gekennzeichnet werden, und bei dem die Signalverarbeitungseinheit (113) eines redundant angebundenen Kommunikationsgeräts (11-14) eine Sequenznummer an eine redundant zu übermittelnde Nachricht vergibt.

15. Verfahren nach Anspruch 14,
und bei dem der Signalverarbeitungseinheit (113) eine Speichereinheit zugeordnet ist, die Sequenznummern bereits fehlerfrei empfangener Nachrichten speichert, und bei dem eine Redundanzbehandlungseinheit (115) der Signalverarbeitungseinheit (113) eine empfangene neue Nachricht auf eine bereits gespeicherte Sequenznummer überprüft.

16. Verfahren nach einem der Ansprüche 11 bis 15,
bei dem redundant zu übermittelnde Nachrichten entsprechend High-availability Seamless Redundancy und/oder entsprechend Parallel Redundancy Protocol übertragen werden.

## Claims

1. Redundantly operable industrial communication system having
- a plurality of communication devices (11-14) that are redundantly linked to an industrial communication network and that each have
- at least a first and a second transmission and reception unit (111, 112), each of which has an interface for a network connection in the industrial communication network, wherein both transmission and reception units have an identical network address,
- a signal processing unit (113) that is connected to the first and second transmission and reception units and that has a multiplexer unit (114) for forwarding messages to be sent to both transmission units in parallel and a redundancy handling unit (115) for processing messages received from both reception units, wherein the redundancy handling unit comprises a filter unit (116) that is set up for detecting received redundant messages,
- a plurality of network infrastructure devices (21-23) that are associated with the industrial communication network and that each have
- a plurality of transmission and reception units (211-214),
- a coupling element (215) that connects the transmission and reception units of a network infrastructure device to one another,
**characterized in that**
- the industrial communication network comprises a plurality of transmission and reception stations (31, 32) for wireless message transmission,
- the industrial communication network comprises a plurality of buffer memory units (217, 311) for message elements that are received by wire at a network node and that are to be sent wirelessly by the latter, wherein the buffer memory units are each associated with a network infrastructure device or with a transmission and reception station, and wherein the buffer memory units each have a maximum buffer size and are designed and set up such that, when the maximum buffer size is exceeded, an oldest message element situated in the respective buffer memory unit is erased from the buffer memory unit, and that, until the maximum buffer size is exceeded, the oldest message element is selected as the next message element (41) to be sent wirelessly.

2. Communication system according to Claim 1,
in which the buffer memory units (217, 311) are in the form of ring buffers.

3. Communication system according to either of Claims 1 and 2,
in which the oldest message element corresponds to the message element that is inserted into the buffer memory unit first among all the message elements situated in the respective buffer memory unit (217, 311).

4. Communication system according to one of Claims 1 to 3, in which the buffer memory units (217, 311) are designed and set up such that a message element is erased from the respective buffer memory unit when a prescribed admissible age is exceeded.

5. Communication system according to one of Claims 1 to 4, in which mutually redundant messages are denoted by a uniform sequence number, and in which the signal processing unit (113) of a redundantly linked communication device (11-14) is set up for allocating a sequence number to a message that is to be transmitted redundantly.

6. Communication system according to Claim 5,
in which the signal processing unit (113) has an associated memory unit that is set up for storing sequence numbers from messages that have already been received without error, and in which the redundancy handling unit is set up for checking for an already stored sequence number when a new message is received.

7. Communication system according to one of Claims 1 to 6, in which the signal processing unit (113) of a redundantly linked communication device (11-14) is implemented by means of a field programmable gate array.

8. Communication system according to one of Claims 1 to 7, in which the coupling element (215) of a network infrastructure device (21-24) is a high speed bus and/or a backplane switch with an associated controller (216).

9. Communication system according to one of Claims 1 to 8, in which messages that are to be transmitted redundantly are transmitted on the basis of high-availability seamless redundancy and/or on the basis of parallel redundancy protocol.

10. Communication system according to one of Claims 1 to 9, in which the industrial communication network comprises first and second transmission and reception stations for wireless message transmission, and in which first transmission and reception stations are base stations, and in which second transmission and reception stations are wireless communication devices that can be connected to a base station.

11. Method for the redundant operation of an industrial communication system, in which
- a plurality of communication devices (11-14) are redundantly linked to an industrial communication network, wherein the communication devices (11-14) each comprise
- at least a first and a second transmission and reception unit (111, 112), each of which has an interface for a network connection in the industrial communication network, wherein both transmission and reception units have an identical network address, and
- a signal processing unit (113) that is connected to the first and second transmission and reception units, that forwards messages to be sent to both transmission units in parallel and that detects redundant messages received from the reception units,
- a plurality of network infrastructure devices (21-24) associated with the industrial communication network are provided that each comprise
- a plurality of transmission and reception units (211-214) and
- a coupling element (215) that connects the transmission and reception units of a network infrastructure device to one another,
**characterized in that**
- message transmission in the industrial communication network takes place wirelessly at least in sections by means of a plurality of transmission and reception stations (31, 32),
- the industrial communication network comprises a plurality of buffer memory units (217, 311) for message elements received at a network node by wire and message elements that are to be sent by the latter wirelessly, wherein the buffer memory units are each associated with a network infrastructure device or with a transmission and reception station, and wherein the buffer memory units each have a maximum buffer size,
- when the maximum buffer size is exceeded, an oldest message element situated in the respective buffer memory unit is erased from the buffer memory unit,
- until the maximum buffer size is exceeded, the oldest message element is selected as the next message element (41) to be sent wirelessly.

12. Method according to Claim 11,
in which the oldest message element corresponds to the message element that is inserted into the buffer memory unit first among all the message elements situated in the respective buffer memory unit (217, 311).

13. Method according to one of Claims 11 and 12,
in which a message element is erased from the respective buffer memory unit (217, 311) when a prescribed admissible age is exceeded.

14. Method according to one of Claims 11 to 13,
in which mutually redundant messages are denoted by a uniform sequence number, and in which the signal processing unit (113) of a redundantly linked communication device (11-14) allocates a sequence number to a message that is to be transmitted redundantly.

15. Method according to Claim 14,
in which the signal processing unit (113) has an associated memory unit that stores sequence numbers from messages that have already been received without error, and in which a redundancy handling unit (115) of the signal processing unit (113) checks a received new message for an already stored sequence number.

16. Method according to one of Claims 11 to 15,
in which messages that are to be transmitted redundantly are transmitted on the basis of high-availability seamless redundancy and/or on the basis of parallel redundancy protocol.

## Revendications

1. Système de communication industriel pouvant fonctionner de manière redondante comprenant
- une multiplicité d'appareils ( 11 à 14 ) de communication reliés de manière redondante à un réseau de communication industriel ayant respectivement
- au moins une première et une deuxième unités ( 111, 112 ) d'émission et de réception, qui ont respectivement une interface pour une liaison au réseau de communication industriel, les deux unités d'émission et de réception ayant une adresse de réseau identique,
- une unité ( 113 ) de traitement du signal, qui est reliée à la première et à la deuxième unités d'émission et de réception et qui a une unité ( 114 ) de multiplexage pour l'acheminement en parallèle de messages à envoyer aux deux unités d'émission et une unité ( 115 ) de traitement de redondance pour le traitement de messages reçus par les deux unités de réception, l'unité de traitement de redondance comprenant une unité ( 116 ) de filtrage, qui est conçue pour détecter des messages redondants reçus,
- une multiplicité d'appareils ( 21 à 23 ) d'infrastructure de réseau associés au réseau de communication industriel ayant respectivement
- une multiplicité d'unités ( 211 à 214 ) d'émission et de réception,
- un élément ( 215 ) de couplage reliant entre elles les unités d'émission et de réception d'un appareil d'infrastructure de réseau,
**caractérisé en ce que**
- le réseau de communication industriel comprend une multiplicité de postes ( 31, 32 ) d'émission et de réception pour une transmission de messages sans câble,
- le réseau de communication industriel comprend une multiplicité d'unités ( 217, 311 ) de mémoire tampon pour des éléments de messages reçus par câble sur un noeud de réseau et émis sans câble de celui-ci, les unités de mémoire tampon étant associées respectivement à un appareil d'infrastructure de réseau ou à un poste d'émission et de réception, et dans lequel les unités de mémoire tampon ont respectivement une dimension de tampon maximum et sont conformées et conçues de manière à ce que, si la dimension de tampon maximum est dépassée, un élément de message le plus ancien se trouvant dans l'unité de mémoire tampon respective est effacé de l'unité de mémoire tampon, et en ce que, jusqu'à un dépassement de la dimension de tampon maximum, l'élément de message le plus ancien est choisi comme élément ( 41 ) de message suivant immédiatement à émettre sans câble.

2. Système de communication suivant la revendication 1,
dans lequel les unités ( 217, 311 ) de mémoire tampon sont conformées en tampons annulaires.

3. Système de communication suivant l'une des revendications 1 ou 2,
dans lequel l'élément de message le plus ancien correspond, parmi tous les éléments de messages se trouvant dans l'unité ( 217, 311 ) de mémoire tampon respective, à l'élément de message inséré en premier dans l'unité de mémoire tampon.

4. Système de communication suivant l'une des revendications 1 à 3,
dans lequel les unités ( 217, 311 ) de mémoire tampon sont conformées et agencées de manière à ce qu'un élément de message soit, si une ancienneté donnée à l'avance est dépassée, effacé de l'unité de mémoire tampon respective.

5. Système de communication suivant l'une des revendications 1 à 4,
dans lequel des messages redondants les uns par rapport aux autres sont **caractérisés par** un numéro de séquence unitaire, et dans lequel l'unité ( 113 ) de traitement du signal d'un appareil ( 11 à 14 ) de communication, reliée de manière redondante, est conçue pour donner un numéro de séquence à un message à transmettre de manière redondante.

6. Système de communication suivant la revendication 5,
et dans lequel, à l'unité ( 113 ) de traitement du signal, est associée une unité de mémoire, qui est agencée pour une mémorisation de numéros de séquence de messages reçus déjà sans erreur, et dans lequel l'unité de traitement de redondance est agencée pour contrôler, à la réception d'un message nouveau, s'il a un numéro de séquence déjà mémorisé.

7. Système de communication suivant l'une des revendications 1 à 6,
dans lequel l'unité ( 113 ) de traitement du signal d'un appareil ( 11 à 14 ) de communication, reliée de manière redondante, est réalisée au moyen d'un field programmable gate arrays.

8. Système de communication suivant l'une des revendications 1 à 7,
dans lequel l'élément ( 215 ) de couplage d'un appareil ( 21 à 24 ) d'infrastructure de réseau est un bus à grande vitesse et/ou un backplane switch à dispositif ( 216 ) de commande associé.

9. Système de communication suivant l'une des revendications 1 à 8,
dans lequel une transmission de messages à transmettre de manière redondante s'effectue conformément au protocole high-availability seamless redundancy et/ou conformément au protocole parallel redundancy.

10. Système de communication suivant l'une des revendications 1 à 9,
dans lequel l'appareil de communication industriel comprend des premier et deuxième postes d'émission et de réception pour une transmission de messages sans câble, et dans lequel des premiers postes d'émission et de réception sont des postes de base, et dans lequel des deuxièmes postes d'émission et de réception sont des appareils de communication sans câble pouvant être reliés à un poste de base.

11. Procédé pour faire fonctionner un système de communication industriel, dans lequel
- on relie une multiplicité d'appareils ( 11 à 14 ) de communication de manière redondante à un réseau de communication industriel, dans lequel les appareils ( 11 à 14 ) de communication ont respectivement
- au moins une première et une deuxième unités ( 111, 112 ) d'émission et de réception, qui ont respectivement une interface pour une liaison au réseau de communication industriel, les deux unités d'émission et de réception ayant une adresse de réseau identique, et
- une unité ( 113 ) de traitement du signal, qui est reliée à la première et à la deuxième unités d'émission et de réception et qui achemine les messages à envoyer en parallèle aux deux unités d'émission et une unité de réception détecte des messages redondants parmi les messages reçus par les unités de réception,
- une multiplicité d'appareils ( 21 à 24 ) d'infrastructure de réseau associés au réseau de communication industriel ayant respectivement
- une multiplicité d'unités ( 211 à 214 ) d'émission et de réception,
- un élément ( 215 ) de couplage reliant entre elles les unités d'émission et de réception d'un appareil d'infrastructure de réseau,
**caractérisé en ce que**
- une transmission de messages dans le réseau de communication industriel s'effectue au moins par section, sans câble, à l'aide d'une multiplicité de postes ( 31, 32 ) d'émission et de réception,
- le réseau de communication industriel comprend une multiplicité d'unités ( 217, 311 ) de mémoire tampon pour des éléments de messages reçus par câble sur un noeud de réseau et à émettre sans câble de celui-ci, les unités de mémoire tampon étant associées respectivement à un appareil d'infrastructure de réseau ou à un poste d'émission et de réception et les unités de mémoire tampon ayant respectivement une dimension de tampon maximum,
si la dimension de tampon maximum est dépassée, on efface de l'unité de mémoire tampon un élément de message le plus ancien se trouvant dans l'unité de mémoire tampon respective,
- jusqu'à un dépassement de la dimension de tampon maximum, on choisit l'élément de message le plus ancien comme élément ( 41 ) de message à émettre sans câble suivant immédiatement.

12. Procédé suivant la revendication 11,
dans lequel l'élément de message le plus ancien correspond, parmi tous les éléments de messages se trouvant dans l'unité ( 217, 311 ) de mémoire tampon respective, à l'élément de message inséré en premier dans l'unité de mémoire tampon.

13. Procédé suivant l'une des revendications 11 ou 12,
dans lequel on efface de l'unité ( 217, 311 ) de mémoire tampon respective un élément de message, si une ancienneté admissible donnée à l'avance est dépassée.

14. Procédé suivant l'une des revendications 11 à 13,
dans lequel on caractérise des messages redondants les uns par rapport aux autres par un numéro de séquence unitaire, et dans lequel l'unité ( 113 ) de traitement du signal d'un appareil ( 11 à 14 ) de communication, reliée de manière redondante, donne un numéro de séquence à un message à transmettre de manière redondante.

15. Procédé suivant la revendication 14,
et dans lequel, à l'unité ( 113 ) de traitement du signal, est associée une unité de mémoire, qui mémorise les numéros de séquences de messages reçus déjà sans erreurs, et dans lequel une unité ( 115 ) de traitement de redondance de l'unité ( 113 ) de traitement du signal contrôle si un message reçu nouvellement a un numéro de séquence déjà mémorisé.

16. Procédé suivant l'une des revendications 11 à 15,
dans lequel on transmet des messages à transmettre de manière redondante conformément au protocole high-availability seamless redundancy et/ou conformément au protocole parallel redundancy.
